# EUROPEAN PATENT SPECIFICATION

(11) **EP 2 852 294 B1**
(45) Date of publication and mention of the grant of the patent: **19.10.2016**
(21) Application number: 12750481.9
(22) Date of filing: 21.05.2012
(51) Int. Cl.: A23L 35/00, A23L 7/126, A23L 33/12, A23L 3/3472

(54) **COMPOSITIONS AND METHODS FOR INCREASING THE STABILITY OF FOOD PRODUCT ADDITIVES**
ZUSAMMENSETZUNGEN UND VERFAHREN ZUR ERHÖHUNG DER STABILITÄT VON LEBENSMITTELZUSÄTZEN
COMPOSITIONS ET PROCÉDÉS PERMETTANT D'ACCROÎTRE LA STABILITÉ D'ADDITIFS DE PRODUITS ALIMENTAIRES

(43) Date of publication of application: 01.04.2015
(73) Proprietor: DSM Nutritional Products AG, 4303 Kaiseraugst (CH)
(72) Inventor: GAREAU, Amber Lynn, Dartmouth, NS B3A 2N8 (CA); PITTMAN, Sharon Ann Spurvey, Middle Sackville, NS B4E 3J7 (CA); TABOADA, Lariza Beristain, Dartmouth, NS B3A 0B7 (CA)
(74) Representative: D Young & Co LLP
(86) International application number: PCT/IB2012/001131
(87) International publication number: WO 2013/175253

(56) References cited:
- EP-A1- 1 897 530
- WO-A1-2008/043856
- KR-A- 20100 098 807
- "Teavigo Fact sheet", www.centerchem.com, 1 February 2012 (2012-02-01), pages 1-2, XP055049144, Retrieved from the Internet: URL:http://www.centerchem.com/PDFs/TEAVIGO Fact Sheet 0212.pdf [retrieved on 2013-01-10]

## Description

### FIELD

The subject matter disclosed herein generally relates to compositions containing powdered green tea extract and powdered preparations comprising polyunsaturated fatty acids. Also, the subject matter disclosed herein generally relates to methods of preparing the compositions and using the compositions in food products, as well as food products containing or that are prepared from the disclosed compositions.

### BACKGROUND

Polyunsaturated fatty acids (PUFAs), including omega-3, omega-6 and omega-9 fatty acids, are vital to everyday life and function. For example, the beneficial effects of omega-3 fatty acids like *cis*-5,8,11,14,17-eicosapentaenoic acid (EPA) and *cis-*4,7,10,13,16,19-docosahexaenoic acid (DHA) on lowering serum triglycerides are well established. All-cis-9,12,15-octadecatrienoic acid (ALA) is the precursor essential fatty acid of EPA and DHA. All-cis-5,8,11,14-eicosatetraenoic acid (AA) and its precursors all-cis-6,9,12-octadecatrienoic acid (GLA) and all-cis-9,12-octadecadienoic acid (LA) have been shown to be beneficial to infants.

Several of these compounds are also known for other cardioprotective benefits such as preventing cardiac arrhythmias, stabilizing atherosclerotic plaques, reducing platelet aggregation, and reducing blood pressure. *See e.g.,* Dyrberg et al., In: Omega-3 Fatty Acids: Prevention and Treatment of Vascular Disease. Kristensen et al., eds., Bi & Gi Publ., Verona-Springer-Verlag, London, pp. 217-26, 1995; O'Keefe and Harris, Am. J. Cardiology 2000, 85:1239-41; Radack et al., "The effects of low doses of omega-3 fatty acid supplementation on blood pressure in hypertensive subjects: a randomized controlled trial." Arch. Intern. Med. 1991, 151:1173-80; Harris, "Extending the cardiovascular benefits of omega-3 fatty acids." Curr. Atheroscler. Rep. 2005, 7:375-80; Holub, "Clinical nutrition: 4 omega-3 fatty acids in cardiovascular care." CMAJ 2002, 166(5):608-15. Indeed, the American Heart Association has also reported that omega-3 fatty acids can reduce cardiovascular and heart disease risk. Other benefits of omega-3 fatty acids are those related to the prevention and/or treatment of inflammation and neurodegenerative diseases, and to improved cognitive development. *See e.g.,* Sugano and Michihiro, "Balanced intake of polyunsaturated fatty acids for health benefits." J. Oleo Sci. 2001, 50(5):305-11.

The fatty acids EPA and DHA can be synthesized in the human body from ALA; however, the conversion rate from this precursor molecule is limited (Muskiet et al., "Is docosahexaenoic acid (DHA) essential? Lessons from DHA status regulation, our ancient diet, epidemiology and randomized controlled trials." J. Nutr. 2004, 134(1):183-6). Accordingly, EPA and DHA in the body are primarily derived from dietary sources (e.g., oily fish). Diets rich in fish oils are known to have many beneficial effects for heart disease, cancer, arthritis, allergies, and other chronic diseases. Epidemiological clinical trials have shown that increasing the dietary intake of omega-3 fatty acids, in the form of fish or of fish oil supplements, may reduce various risk factors associated with cardiovascular disease. *See e.g.,* The American Heart Association, Scientific Statement, "Fish Consumption, Fish Oil, Omega-3 Fatty Acids and Cardiovascular Disease," November 2002; Appel et al., "Does supplementation of diet with 'fish oil' reduce blood pressure? A meta-analysis of controlled clinical trials." Arch. Intern. Med. 1993, 153(12):1429-1438; GISSI-Prevenzione Investigators. "Dietary supplementation with omega-3 polyunsaturated fatty acids and vitamin E after myocardial infarction: results of the GISSI-Prevenzione trial." Lancet 1999, 354:447-55.

In addition to fish oil sources of EPA and DHA, these PUFAs, as well as ALA, AA and GLA, can be and are derived from microbial sources including, without limitation, *Mortiarella alpina* for ARA and various species of Thraustochytrids for DHA and EPA. Plants are now being modified genetically to include genes that produce various PUFAs in further efforts to reduce costs associated with commercial production of these oils.

Despite the strong evidence for the various benefits of PUFAs like EPA and DHA, the average daily consumption of these fatty acids by North Americans is estimated to be between 0.1 to 0.2 grams, compared to a suggested daily intake of 0.65 grams to confer benefit (Webb, "Alternative sources of omega-3 fatty acids." Natural Foods Merchandise 2005, XXVI(8):40-4). Since altering dietary patterns of populations is difficult, some people do not like to eat fish, and the notion of consuming PUFAs derived from microbes has not achieved general acceptance, the supplementation of diets with PUFAs is an important approach to addressing this problem. Unfortunately, many PUFAs are sensitive to oxidation and can have unpleasant sensory properties.

KR 2010 0098807 discloses powdered composition, comprising: a powdered green tea extract and a powdered preparation comprising polyunsaturated fatty acids, wherein the combined amount of the powdered green tea extract and the powdered preparation comprising polyunsaturated fatty acids is at least about 80% by weight of the composition, and wherein the powdered green tea extract comprises 37, 5 wt.% of epigallocatechin gallate (EGCG) and 12,5 wt.% of epigallocatechin (EGC) based on the weight of the powdered green tea extract.

In light of the health benefits of PUFAs, alternative methods of delivering PUFAs to a subject and methods for reducing the oxidation of PUFAs are needed. The subject matter disclosed herein addresses these and other needs.

### SUMMARY

In accordance with the purposes of the disclosed materials, compounds, compositions, and methods, as embodied and broadly disclosed herein, the disclosed subject matter, in one aspect, relates to compositions that comprise a powdered green tea extract and a powdered preparation comprising PUFAs. In a further aspect, the disclosed subject matter relates to methods of preparing the compositions. In a still further aspect, the disclosed subject matter relates to food products comprising the compositions and methods of making the food products. Additional advantages will be set forth in the description that follows, and in part will be obvious from the description, or may be learned by practice of the aspects described below. The advantages described below will be realized and attained by means of the elements and combinations particularly pointed out in the appended claims. It is to be understood that both the foregoing general description and the following detailed description are exemplary and explanatory only and are not restrictive.

### BRIEF DESCRIPTION OF THE FIGURES

The accompanying Figures, which are incorporated in and constitute a part of this specification, illustrate several aspects described below.

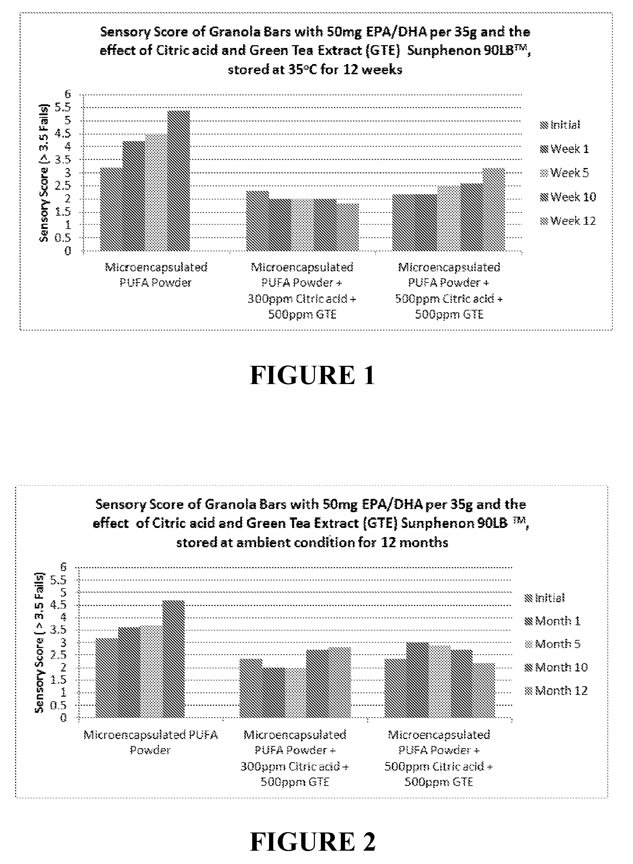

**Figure 1** is graph depicting sensory scores of granola bars prepared with microencapsulated PUFAs (which contained 50 mg EPA/DHA per 35 g of the granola bar) and varying amounts of citric acid and green tea extract after storing at 35°C for twelve weeks. A sensory score of greater than 3.5 is considered failing.
**Figure 2** is graph depicting sensory scores of granola bars prepared with microencapsulated PUFAs (which contained 50 mg EPA/DHA per 35 g of the granola bar) and varying amounts of citric acid and green tea extract after storing under ambient conditions for twelve months. A sensory score of greater than 3.5 is considered failing.

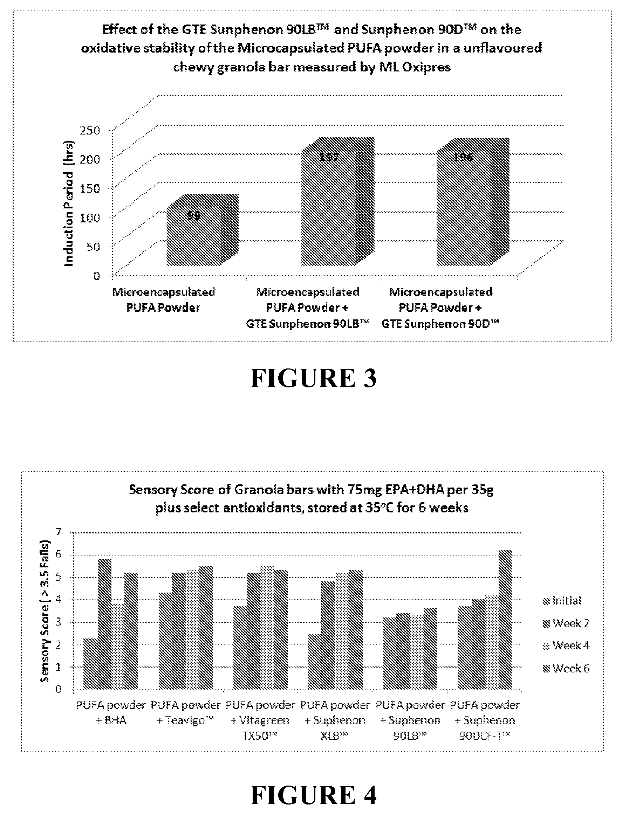

**Figure 3** is a graph illustrating the oxidative stability of granola bars containing microencapsulated PUFAs with and without green tea extract.
**Figure 4** is a graph depicting sensory scores of granola bars containing microencapsulated PUFAs (which contained 75 mg of EPA/DHA per 35 g of the granola bar) and varying antioxidants, including butylated hydroxyanisole (BHA), TEAVIGO^{™}, VITAGREEN^{™}, SUNPHENON XLB^{™}, SUNPHENON 90LB^{™}, and SUNPHENON 90DCF-T^{™}, over six weeks at 35°C. A sensory score of greater than 3.5 is considered failing.

### DETAILED DESCRIPTION

The materials, compounds, compositions, and methods described herein can be understood more readily by reference to the following detailed description of specific aspects of the disclosed subject matter and the Examples and Figures included herein.

Before the present materials, compounds, compositions, articles, and methods are disclosed and described, it is to be understood that the aspects described below are not limited to specific synthetic methods or specific reagents, as such may, of course, vary. It is also to be understood that the terminology used herein is for the purpose of describing particular aspects only and is not intended to be limiting.

### Definitions

In this specification and in the claims that follow, reference will be made to a number of terms, which shall be defined to have the following meanings:
Throughout the specification and claims the word "comprise" and other forms of the word, such as "comprising" and "comprises," means including but not limited to, and is not intended to exclude, for example, other additives, components, integers, or steps.

As used in the description and the appended claims, the singular forms "a," "an," and "the" include plural referents unless the context clearly dictates otherwise. Thus, for example, reference to "a composition" includes mixtures of two or more such compositions, reference to "an antioxidant" includes mixtures of two or more such antioxidant, reference to "the polyunsaturated fatty acid" includes mixtures of two or more such polyunsaturated fatty acids, and the like.

"Optional" or "optionally" means that the subsequently described event or circumstance can or cannot occur, and that the description includes instances where the event or circumstance occurs and instances where it does not.

Ranges can be expressed herein as from "about" one particular value, and/or to "about" another particular value. "About" can mean within 5% of the stated value. When such a range is expressed, another aspect includes from the one particular value and/or to the other particular value. Similarly, when values are expressed as approximations, by use of the antecedent "about," it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "5" is disclosed, then "about 5" is also disclosed.

References in the specification and concluding claims to parts by weight of a particular element or component in a composition denotes the weight relationship between the element or component and any other elements or components in the composition for which a part by weight is expressed. Thus, in a composition comprising 1 parts by weight of component X (*e.g.,* the powdered green tea extract) and 10 parts by weight component Y (*e.g.,* the powdered preparation comprising PUFAs), X and Y are present at a weight ratio of 1:10, and are present in such ratio regardless of whether additional components are comprised in the composition (*e.g*., the blend).

A weight percent (wt. %) of a component, unless specifically stated to the contrary, is based on the total weight of the formulation or composition in which the component is included.

As used herein, by a "subject" is meant an individual. Thus, the "subject" can include domesticated animals (*e.g.,* cats, dogs, etc.), livestock (*e.g.,* cattle, horses, pigs, sheep, goats, etc.), laboratory animals (*e.g*., mouse, rabbit, rat, guinea pig, etc.), fish, and birds. "Subject" can also include a terrestrial or marine mammal, such as a whale, primate or a human.

Reference will now be made in detail to specific aspects of the disclosed materials, compounds, compositions, and methods, examples of which are illustrated in the accompanying Examples and Figures.

### Materials and Methods

Disclosed herein are materials, compounds, compositions, and components that can be used for, can be used in conjunction with, can be used in preparation for, or are products of the disclosed methods and compositions. These and other materials are disclosed herein, and it is understood that when combinations, subsets, interactions, groups, etc. of these materials are disclosed that while specific reference of each various individual and collective combinations and permutation of these compounds may not be explicitly disclosed, each is specifically contemplated and described herein. For example, if a composition is disclosed and a number of modifications that can be made to a number of components of the composition are discussed, each and every combination and permutation that are possible are specifically contemplated unless specifically indicated to the contrary. Thus, if a class of components A, B, and C are disclosed as well as a class of components D, E, and F and an example of a combination composition A-D is disclosed, then even if each is not individually recited, each is individually and collectively contemplated. Thus, in this example, each of the combinations A-E, A-F, B-D, B-E, B-F, C-D, C-E, and C-F are specifically contemplated and should be considered disclosed from disclosure of A, B, and C; D, E, and F; and the example combination A-D. Likewise, any subset or combination of these is also specifically contemplated and disclosed. Thus, for example, the sub-group of A-E, B-F, and C-E are specifically contemplated and should be considered disclosed from disclosure of A, B, and C; D, E, and F; and the example combination A-D. This concept applies to all aspects of this disclosure including, but not limited to, steps in methods of making and using the disclosed compositions. Thus, if there are a variety of additional steps that can be performed it is understood that each of these additional steps can be performed with any specific aspect or combination of aspects of the disclosed methods, and that each such combination is specifically contemplated and should be considered disclosed.

Disclosed herein are compositions (also referred to as "blends") that comprise (i) a powdered green tea extract and (ii) a powdered preparation comprising PUFAs. By "powdered preparation comprising PUFAs" is meant a powdered emulsion or microcapsule that has a loading substance comprising one or more PUFAs. In the disclosed compositions, the powdered green tea extract and powdered preparation comprising PUFAs are, together, at least 90% by weight of the composition, *e.g*., 92, 94, 06, 98 or 100% by weight of the composition. Thus, the disclosed compositions can contain from 0% to 10% by weight of additional materials (*i.e.,* materials other than the powdered green tea extract and powdered preparation comprising PUFAs) in the composition. Further, as is disclosed elsewhere herein, the disclosed compositions are particularly well suited to be used as ingredients in a wide variety of food products, such as granola bars.

### Powdered preparations comprising PUFAs

### Microcapsules

In certain aspects, the powdered preparation comprising PUFAs can be a microcapsule comprising one or more PUFAs as its core or loading substance. Suitable microcapsules for use in the disclosed compositions and methods are those that comprise an agglomeration of primary microcapsules and a loading substance, each individual primary microcapsule having a primary shell, wherein the loading substance is encapsulated by the primary shell, and wherein the agglomeration is encapsulated by an outer shell. Particularly suitable microcapsules are disclosed in US Patent Nos. 6,974,592, 6,969,530, 7,727,629, and 8,034,450, and US Publication Nos. 2005/0019416, 2010/0055281, 2010/0173002, and 2011/0117180.

It is also contemplated that one or more additional shell layers can be placed on the outer shell of the microcapsules. The techniques described in International Publication No. WO 2004/041251, which is incorporated by reference in its entirety at least for its disclosure of microcapsules and their methods of preparation, can be used to add additional shell layers to the microcapsules.

In further examples, the primary shell and/or outer shell can be formed from a complex coacervate. A complex coacervate forms when two different polymer components *(i.e.,* shell materials) come together through electrostatic interactions and form an insoluble complex or "complex coacervate" around droplets of loading substance. The complex coacervate that forms the primary shells can be different from the complex coacervate that forms the outer shell. In such a case, a polymer system that contains three or more different shell materials can be used to form the complex coacervate. In other examples, the same two shell materials (a two polymer component system) can be used to form both the primary and outer shells. For example, the primary shell and outer shell can be formed from a complex coacervate of gelatin and polyphosphate.

In such microcapsules, the shell material used to form the primary and/or outer shells can comprise a complex coacervate of gelatin and polyphosphate, gelatin and gum arabic, whey protein and gum arabic, and the like. Further examples of suitable materials for the primary shell and/or outer shells include, but are not limited to, complex coacervates of any one or more of the following proteins: gelatin type A, gelatin type B, pork gelatin, beef gelatin, fish gelatin, kosher gelatin, non-kosher gelatin, Halal gelatin, non-Halal gelatin, milk protein, casein, caseinate, whey protein, soy protein, pea protein, rice protein, canola protein, albumin, alfa-lactalbumin, beta-lactoglobumin, and ovalbumin, with one more of any of the following polymers: polyphosphate, gum arabic, gellan gum, xylan gum, agar, alginate, chitin, chitosan, carrageenan, pectin, starch, modified starch, polysorbiton, maltodextrin, cyclodextrin, cellulose, methyl cellulose, ethyl cellulose, hydropropylmethylcellulose, and carboxymethylcellulose.

In further examples, materials for the primary shell and/or outer shells can have a Bloom number of from 0 to 300, most preferably from 200 to 300. It is also contemplated that the shell material can have no Bloom number (0) or a low Bloom number of 1 to 50. The Bloom number describes the gel strength formed at 10°C with a 6.67% solution gelled for 18 hours. Determining the Bloom number of a substance can be accomplished by methods known in the art. In some specific examples the primary shell and/or outer shell material can have a Bloom number of from 0 to 50, and in other examples the primary shell and/or outer shell material can have a Bloom number of from 51 to 300. Still other specific examples include microcapsules comprising a primary shell and/or outer shell material having a Bloom number of 0, 210, 220, or 240. It is contemplated that the primary shell and/or outer shell material can have a Bloom number of 0, 10, 20, 30, 40, 50, 60, 70, 80, 90, 100, 110, 120, 130, 140, 150, 160, 165, 170, 180, 190, 200, 210, 220, 230, 240, 250, 260, 270, 280, 290, or 300, where any of the stated values can form an upper or lower endpoint of a range.

The outer shell of the microcapsules can have an average diameter of from about 1 µm to 2,000 µm, from 20 µm to 1,000 µm, or from 30 µm to 80 µm. In further examples, the average diameter of the outer shell can be 1, 10, 20, 30, 40, 50, 60, 70, 80, 90, 200, 300, 400, 500, 600, 700, 800, 900, 1000, 1200, 1300, 1400, 1500, 1600, 1700, 1800, 1900, or 2000 µm, where any of the stated values can form an upper or lower endpoint of a range. In preferred examples, the outer shell of the microcapsule can have an average diameter of less than 500 µm, less than 200 µm, or less than 100 µm.

The primary shells can have an average diameter of from about 40 nm to about 10 µm or from 0.04 µm to 5 µm. In further examples, the average diameter of the primary shell can be 40 nm, 50 nm, 60 nm, 70 nm, 80 nm, 90 nm, 100 nm, 200 nm, 300 nm, 400 nm, 500 nm, 600 nm, 700 nm, 800 nm, 900 nm, 1000 nm, 2 µm, 3 µm, 4 µm, or 5 µm, where any of the stated values can form an upper or lower endpoint of a range. In preferred examples, the primary shell can have an average diameter of less than

Particle size of the primary and/or outer shell can be measured using any typical equipment known in the art, for example, a Coulter LS230 Particle Size Analyzer (Beckman Coulter; Miami, Florida).

### Emulsions

In other aspects, the powdered preparation comprising PUFAs can be a powered emulsion. The emulsions can comprise droplets of loading substance of various sizes and one or more polymer components, all in a powered form. For example, a suitable emulsion can be a microemulsion and/or a nanoemulsion. That is, the droplets of the emulsions can be in the micrometer range *(i.e.,* 1 to 1000 µm) or nanometer range *(i.e.,* 1 to 1000 nm, typically less than 0.1 µm). Specific examples include, but are not limited to, emulsions that have an average droplet size of less than 100, 90, 80, 70, 60, 50, 40, 30, 20, or 10 µm, where any of the stated values can form an upper or lower endpoint of a range. The size of the droplets of loading substance can be determined by methods known in the art, such as light scattering, microscopy, spectroscopically, and the like.

The polymer component for the emulsions can be any of the shell materials described herein in reference to the microcapsules. Specifically, the polymer component can comprise any one or more of the following: gelatin type A, gelatin type B, pork gelatin, beef gelatin, fish gelatin, kosher gelatin, non-kosher gelatin, Halal gelatin, non-Halal gelatin, milk protein, casein, caseinate, whey protein, soy protein, pea protein, rice protein, canola protein, albumin, alfa-lactalbumin, beta-lactoglobumin, ovalbumin, polyphosphate, gum arabic, gellan gum, xylan gum, agar, alginate, chitin, chitosan, carrageenan, pectin, starch, modified starch, polysorbiton, maltodextrin, cyclodextrin, cellulose, methyl cellulose, ethyl cellulose, hydropropylmethylcellulose, and carboxymethylcellulose, including any mixture or combination of these.

In one specific example of a suitable powered emulsion, the polymer component comprises gelatin.

### Loading Substance

The powdered preparations comprising PUFAs, whether the microcapsule or emulsion, contains a loading substance that comprises one or more PUFAs and/or derivatives thereof. Derivatives of PUFAs can include alkyl esters (e*.g.*, methyl or ethyl esters), glyceride esters *(e.g.,* mono, di, and triacylglycerol), sterol esters *(e.g.,* phytosterol or cholesterol esters), antioxidant esters (*e.g*., ascorbyl and citryl esters), furanoid esters, and salts of PUFAs (*e.g*., sodium, potassium, calcium, magnesium, and chromium salts). Any mixture or combination of PUFAs and/or derivatives thereof can also be suitable for use in the compositions and methods disclosed herein.

Particularly desirable PUFAs are omega-3 fatty acids. An omega-3 fatty acid is an unsaturated fatty acid that contains as its terminus CH₃-CH₂-CH=CH-. Generally, an omega-3 fatty acid has the following formula: 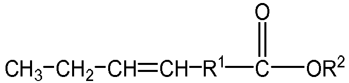 wherein R¹ is a C₃-C₄₀ alkyl or alkenyl group comprising at least one double bond and R² is H, metal, alkyl, glycerol, sterol, ascorbyl, citryl, or furanoidyl, group. The term "alkyl" as used herein is a saturated hydrocarbon group (*e.g.*, methyl, ethyl, n-propyl, isopropyl, n-butyl, isobutyl, s-butyl, t-butyl, n-pentyl, isopentyl, s-pentyl, neopentyl, hexyl, heptyl, octyl, nonyl, decyl, dode cyl, tetradecyl, hexadecyl, eicosyl, tetracosyl, and the like). The term "alkenyl" as used herein is a hydrocarbon group containing at least one carbon-carbon double bond. Asymmetric structures such as (AB)C=C(CD) are intended to include both the *E* and *Z* isomers (*cis* and *trans*). In a further example, R¹ can be a C₅-C₃₈, C₆-C₃₆, C₈-C₃₄, C₁₀-C₃₂, C₁₂-C₃₀, C₁₄-C₂₈, C₁₆-C₂₆, or C₁₈-C₂₄ alkenyl group. In yet another example, the alkenyl group of R¹ can have from 2 to 6, from 3 to 6, from 4 to 6, or from 5 to 6 double bonds. Still further, the alkenyl group of R¹ can have from 1, 2, 3, 4, 5, or 6 double bonds, where any of the stated values can form an upper or lower endpoint as appropriate. Specific examples of omega-3 fatty acids include, but are not limited to, those noted elsewhere herein.

In certain examples, the loading substance comprises DHA and/or EPA, a C₁-C₆ alkyl ester thereof, a triacylglycerol ester thereof, a phytosterol or cholesterol ester thereof, a salt thereof, and/or any mixture of one or more of these. Triacylglycerol oils (referred to as TG oils) can be used. Still further, the disclosed compositions and methods can use oils comprising re-esterified triglycerides.

The loading substance can be a solid, a liquid, or a mixture of a solid and a hydrophobic liquid, depending on the temperature and the particular PUFAs in the loading substance. Optionally, the loading substance can also comprise other biologically active substances, nutritional supplements, and/or flavorings, including any mixture or combination of these. In certain examples, the PUFA containing loading substance can be a microbial oil, algal oil (*e.g.,* oil from a dinoflagellate such as *Crypthecodinium cohnii*), fungal oil (*e.g.,* oil from *Thraustochytrium, Schizochytrium,* or a mixture thereof), and/or plant oil, including any mixture or combination of these.

In other examples, the loading substance can comprise a marine oil, such as natural, semi-refined, refined, concentrated, light pressed, alkali treated, heat treated, light brown, or heavy brown fish oil. Non-alkali treated fish oil is also a suitable loading substance. Fish oils come from a variety of sources. Examples of suitable fish oils include, but are not limited to, Atlantic fish oil, Pacific fish oil, Mediterranean fish oil, and any mixture or combination of these. More specific examples of suitable fish oils include, but are not limited to, bonito oil, pilchard oil, sea bass oil, halibut oil, spearfish oil, barracuda oil, cod oil, menhaden oil, sardine oil, anchovy oil, tuna oil, capelin oil, herring oil, mackerel oil, salmon oil, salmonid oil, and shark oil, including any mixture or combination of these.

While fish oils are most readily available, other marine oils can be suitable for use herein. Such marine oils include, but are not limited to, oil derived from marine mammals and/or marine invertebrates, including for example squid oil, octopus oil, krill oil, seal oil, whale oil, and the like, including any mixture or combination of these.

The loading substance can also comprise vegetable oils such as olive oil, corn oil, palm oil, sunflower oil, flaxseed, soybean oil, peanut oil, borage oil, primrose oil, linseed oil, rapeseed oil, and the like. Oils from plants that have been genetically modified to produce certain PUFAs can also be used. But in some examples, it is preferable that the PUFA is not a flax seed oil.

Suitable loading substances can also be referred to herein by the approximate ratio of EPA and DHA, or derivatives thereof, found in the loading substance. For example, 18:12 oils generally comprise a ratio of EPA to DHA (or their triglyceride esters for example) of about 18:12. Likewise, 5:25 oils generally comprise a ratio of EPA to DHA of about 5:25. Each of these types of oils can be used in the disclosed compositions and methods.

It is contemplated herein that one or more of any of the disclosed loading substances can be used. For example, the powdered preparation comprising PUFAs usable in the disclosed compositions and methods can contain two or more different loading substances, as disclosed herein. Further, the loading substance can be present in an amount of from 10% to 90% by weight of the powdered preparation comprising PUFAs. In specific examples, the loading substance can be present in an amount of from 20% to 80%, from 30% to 70%, from 40% to 60%, from 50% to 70%, or from 60% to 80% by weight of the powdered preparation comprising PUFAs.

Optionally, the loading substance can also contain an antioxidant. Suitable examples of antioxidants include, but are not limited to, a phenolic compound, a plant extract, or a sulphur-containing compound. In certain examples disclosed herein the antioxidant can be ascorbic acid or a salt thereof, *e.g*., sodium ascorbate. In other examples, the antioxidant can be citric acid or a salt thereof. In still other examples, the antioxidant can be vitamin E, CoQ₁₀, tocopherols, lipid soluble derivatives of more polar antioxidants such as ascorbyl fatty acid esters (*e.g.,* ascorbyl palmitate), plant extracts (*e.g.,* rosemary, sage and oregano oils), algal extracts, and synthetic antioxidants (*e.g*., BHT, TBHQ, ethoxyquin, alkyl gallates, hydroquinones, and tocotrienols).

The loading substance can also contain other nutrient(s) such as vitamins other trace elements, minerals, and the like. For example, the loading substance can contain one or more of a fat soluble vitamins (e.g., vitamins A, D, E, and K), tocotrienols, carotenoids, xanthophylls, (e.g., lycopene, lutein, astaxanthin, and zeazanthin), fat-soluble nutraceuticals including phytosterols, stanols and esters thereof, Coenzyme Q10, ubiquinol, hydrophobic amino acids, or an essential oil. Further, the powdered preparation comprising PUFAs can comprise other components such as preservatives, antimicrobials, chelating agents, thickeners, flavorings, diluents, emulsifiers, dispersing aids, or binders.

### Specific Examples

Whether the powdered preparation comprising PUFAs is a microcapsule or powdered emulsion, it can comprise any of the shell materials and any of the loading substances disclosed herein. Some specific examples include, but are not limited to, microcapsules where the shell materials are formed from complex coacervates, *e.g*., complex coacervates of gelatin and polyphosphate. Similarly, powdered emulsions where the polymer component is gelatin and the loading substance is any of those disclosed herein. Loading substances that can be used in many examples include marine oils (*e.g.,* fish oils and microbial oils). Loading substances that comprise PUFAs, such as EPA and DHA, are also desirable. Such microcapsules or emulsions can have at least 130 mg of DHA or at least 150 mg of EPA and DHA per gram of powder. Further, derivatives of omega-3 fatty acids, such as mono-, di-, and triglycerides, alkyl esters, sterol esters, antioxidant esters (*e.g*., ascorbyl and citryl esters), and furanoid esters, can also be suitable loading substances. In certain aspects, the powdered preparation comprising PUFAs can be a microencapsulated omega-3 fatty acid powder commercially available from Ocean Nutrition Canada Limited (Dartmouth, Canada) sold under the name MEG-3^{™}.

The microcapsules can be prepared according to the methods described in US Patent Nos. 6,974,592, 6,969,530, 7,727,629, and 8,034,450, and US Publication Nos. 2005/0019416, 2007/0269566, 2010/0055281, 2010/0173002, and 2011/0117180.

The microcapsules can be washed with water and dried to provide a free-flowing powder. Drying can be accomplished by a number of methods known in the art such as, for example, freeze drying, drying with ethanol, or spray drying. In one aspect, spray drying can be used for drying the microcapsules. Spray drying techniques are disclosed in "Spray Drying Handbook", K. Masters, 5th edition, Longman Scientific Technical UK, 1991.

The emulsions can be prepared according to the methods described in US Publication No. 2010/0055281.

In general, the emulsions can be prepared by providing an aqueous mixture of the polymer component and a loading substance and emulsifying the mixture. Emulsifying the mixture can be accomplished by methods and apparatus known in the art, *e.g*., homogenization and high pressure/high shear pumps. For example, emulsification can take place by emulsifying at from 1,000 to 15,000 rpm. The emulsification step can be monitored by removing a sample of the mixture and analyzing it under such methods as microscopy, light scattering, turbidity, etc. Generally, emulsification can be performed until an average droplet size of less than 1,000, 750, 500, 100, or 10 nm is obtained. It is further contemplated that antioxidants, which are also described herein, can be added to the aqueous mixture. Such antioxidants can be added before the emulsifying step, during the emulsifying step, and/or after the emulsifying step. It is also contemplated that after the emulsions are prepared, they are dehydrated. Methods for dehydrating emulsions are known in the art and include, but are not limited to, spray drying, freeze drying, evaporation, and the like.

### Green Tea Extract

The compositions disclosed herein further contain a powdered green tea extract. The green tea extract is a component of the disclosed compositions, present in combination with the powdered preparation comprising PUFAs (microcapsules or emulsions). The green tea extract can also be part of the loading substance.

Green tea extracts suitable for use in the disclosed compositions include various components that have antioxidant activity, such as polyphenolic compounds *(i.e.,* catechins). Examples of polyphenolic compounds that can be present in green tea extract include epigallocatechin gallate (EGCG), epigallocatechin (EGC), epicatechin gallate (ECG), epicatechin (EC), and mixtures of these. The green tea extracts that can be used in the disclosed compositions can have one or more polyphenolic compounds present in the extract in an amount from 40 wt.% to 90 wt.%, from 45 wt.% to 85 wt.%, from 50 wt.% to 80 wt.%, from 60 wt.% to 90 wt.%, from 65 wt.% to 85 wt.%, from 70 wt.% to 95 wt.%, from 75 wt.% to 90 wt.%, from 80 wt.% to 95 wt.%, or from 85 wt.% to 90 wt.% based on the weight of the green tea extract. Some preferred green tea extracts contain greater than 80 wt. % polyphenols.

The green tea extracts that can be used in the disclosed compositions can have one or more catechins present in the extract in an amount from 40 wt.% to 80 wt.%, from 45 wt.% to 75 wt.%, from 50 wt.% to 70 wt.%, from 55 wt.% to 80 wt.%, from 60 wt.% to 75 wt.%, from 65 wt.% to 70 wt.%, from 75 wt.% to 80 wt.%, or from 55 wt.% to 65 wt.% based on the weight of the green tea extract. Some preferred green tea extracts can contain greater than 60 wt. % catechins.

While not wishing to be bound by theory, it is believed that the content of the EGCG and the EGC impacts the ability of the disclosed compositions to provide compositions that have desirable sensory characteristics or stability. Green tea extracts suitable for use herein can have an epigallocatechin gallate (EGCG) content of greater than 40 wt. %, greater than 45 wt. %, greater than 50 wt. %, or greater than 55 wt. %, based on the weight of the green tea extract. For example, the green tea extract can have from about 40 to 60 wt.% EGCG, from 45 to 55 wt.%, or 50 wt. %, based on the weight of the green tea extract. The green tea extract can also have a epigallocatechin (EGC) content of from 5 to 20 wt. %, from 5 to 15 wt. %., from 10 to 13 wt. %, based on the weight of the green tea extract.

Still further, suitable green tea extracts for use herein can have a epicatechin (EC) content of greater than 6 wt. %, from 6 to 15 wt. %, from 6 to 12 wt. %, from 7 to 10 wt.%, or from 7 to 9 wt.%, based on the weight of the green tea extract. Suitable green tea extracts for use herein can also have a epicatechin gallate (ECG) content of from 2 to 9 wt.%, from 3 to 8 wt.%, or from 4 to 7 wt.%, based on the weight of the green tea extract.

It is also desirable the green tea extracts be decaffeinated or have less than 1 wt. % caffeine.

The green tea extract is in the disclosed composition in a powdered form.

A commercially available powdered green tea extract that is suitable for use in the disclosed compositions and methods includes SUNPHENON 90LB^{™} and SUNPHENON 90D^{™} from Taiyo Kagaku Co. (Yokkaichi, Mie, Japan). Further examples of suitable green tea extracts include TEAVIGO^{™}, commercially available from Pharmachem Laboratories, Inc. (Kearny, NJ), and VITAGREEN TX50^{™} (VitaGreen Natural Green Tea Extract, commercially available from Vita Green, Hong Kong, CN). The green tea extracts suitable for use herein contain purified polyphenols. A further example of a suitable green tea extract is SUNPHENON 90DCF-T^{™}, commercially available from Taiyo Kagaku Co. These green tea extracts can be used, though SUNPHENON 90LB^{™} is preferred. SUNPHENON 90LB^{™} is a decaffeinated extract of green tea leaves (*Camellia sinensis*), which contains greater than 80 wt. % total polyphenols with 80 wt. % being catechins. The catechin EGCG is present at greater than 45 wt. % and the catechin EGC is present at greater than 8 wt.%.

The green tea extract can be present in an amount from 2% to 10%, from 3% to 9%, from 4% to 8%, from 5% to 7% by weight of the composition. In certain examples the green tea extract can be present at 5.0% (*e.g.,* 5.2%) by weight of the composition.

As noted previously, the disclosed compositions can be used as ingredients of a variety of food products. In some examples, the amount of green tea extract used in the disclosed compositions can be an amount that results in the green tea extract being at from 50 ppm to 1000 ppm of the final food product (*e.g*., granola bar). In some examples, the green tea extract is present in an amount of from 100 ppm to 900 ppm, from 150 ppm to 850 ppm, from 200 ppm to 800 ppm, from 250 ppm to 750 ppm, from 300 ppm 7 to 700 ppm, from 350 ppm to 650 ppm, from 400 ppm to 600 ppm, or from 450 ppm to 550 ppm of the final food product. For example, the green tea extract can be present in an amount of 50 ppm, 100 ppm, 150 ppm, 200 ppm, 250 ppm, 300 ppm, 350 ppm, 400 ppm, 450 ppm, 500 ppm, 550 ppm, 600 ppm, 650 ppm, 700 ppm, 750 ppm, 800 ppm, 850 ppm, 900 ppm, 950 ppm, or 1000 ppm of the final food product, where any of the stated values can form an upper and/or lower endpoint of a range. *Compositions*

As described herein, the disclosed compositions contain a powdered preparation comprising PUFAs, as disclosed herein, and powdered green tea extract, as disclosed herein. A method of preparing the disclosed composition includes providing the powdered green tea extract, providing the powdered preparation comprising PUFAs, and blending the two components to form a composition or "blend." The powdered preparation comprising PUFAs and powdered green tea extract can be combined in any order. For example, the microcapsules or emulsions can be added to the powdered green tea extract. Alternatively, the powdered green tea extract can be added to the microcapsules or emulsions. Upon combining the powdered preparation comprising PUFAs with the powdered green tea extract, the components can be mixed or blended to result in the disclosed composition. Such mixing can be accomplished by methods known in the art.

The powdered preparation comprising PUFAs and powdered green tea extract can be combined in a variety of ratios in the disclosed compositions. For example, the disclosed compositions can have a powdered preparation comprising PUFAs to powdered green tea extract weight ratio of 1:10 to 1:50. Other ratios can be used, however, depending on the final use of the disclosed composition, preference, desired loading substance amount, final food product, and the like.

The powdered preparation comprising PUFAs (either microcapsules or emulsion) can comprise 98%, 97%, 96%, 95%, 94%, 93%, 92%, 91%, or 90% by weight of the composition, where any of the stated values can form an upper or lower endpoint of a range. Likewise, the powdered green tea extract can comprise 10%, 9%, 8%, 7%, 6%, 5%, 4%, 3%, or 2% by weight of the composition, where any of the stated values can form an upper or lower endpoint of a range. The amount of the powdered preparation comprising PUFAs and the powdered green tea extract are to be selected such that the combination of the two is at least 90% by weight of the composition.

### Additional Components

In the disclosed compositions, one or more antioxidants can be used in combination with or in addition to green tea extract. Such additional components can be present in the disclosed composition at from 0% to 10% by weight of the composition. For example, the disclosed compositions can further include citric acid. In preferred aspects, citric acid, when present, can be used in combination with green tea extract rather than as a green tea extract replacement. Citric acid chelates metals such as Fe and Cu, which induce auto-oxidation during storage. Thus, citric acid can prolong the oxidative stability of the disclosed composition and products including the composition, thus allowing the composition and products to be stored for long terms. The citric acid can be present in the disclosed composition in an amount of from 1% to 7.5% by weight of the composition. The amount of citric acid can also be expressed in relation to the amount of powdered green tea extract. Thus, in certain examples, the disclosed compositions can contain citric acid and powdered green tea extract in a ratio of 1:1 to 1:5.

Further examples of suitable antioxidants for use as additional components in the disclosed compositions include tocopherols, vitamin E, CoQ₁₀, sage extract, rosemary extract, oregano extract, algal extracts, ascorbyl palmitate, ascorbic acid, licopene, hydroxytyrosol, astaxanthin, and synthetic antioxidants (*e.g*., BHT, BHA, EDTA, TBHQ, ethoxyquin, alkyl gallates, hydroquinones, and tocotrienols).

### Methods of Use

Also disclosed herein are food products that comprise the disclosed compositions. Food product refers to any article that can be consumed (*e.g*., eaten or ingested) by a subject. In some examples, the disclosed compositions can be included in nutritional bars and granola bars. In other examples, the disclosed compositions can be contained in articles such as sachets or shakers, which can be used to mix, pour or sprinkle the disclosed compositions onto and into food products or their ingredients. Still other examples include baked goods (*e.g*., breads, rolls, cookies, crackers, fruit pies, or cakes), pastas, condiments, salad dressings, soup mixes, snack foods, processed fruit juices, sauces, gravies, syrups, beverages, dry beverage powders, jams or jellies, or pet companion food that have been prepared with a composition as disclosed herein.

The products containing the disclosed compositions can have enhanced sensory and oxidative stabilities, especially as compared to products without the disclosed compositions and with just neat PUFAs or powdered PUFA preparations. The stability of these products can be measured using, for example, a ML Oxipres instrument (Mikrolab Aarhus A/S; Hojbjerg, Denmark). The Oxipres instrument is a rapid predictive tool used to measure qualitatively the oxidative stability of compounds susceptible to oxidation. The measurement is based on consumption of oxygen at elevated temperature and pressure. The induction period (IP) of oxidation is calculated as the time after which the pressure began to decrease abruptly. An increased induction period indicates an improvement in oxidative stability. The induction period of the food products containing the disclosed compositions can be increased by reducing the formation of peroxides or by removing/decomposing the peroxides present in the oil. Thus, the food products prepared using the compositions disclosed herein have longer induction periods due to the use of the compositions as disclosed herein. For example, the disclosed compositions, and products that contain them, can have an induction period of at least 180 hours, preferably greater than 185 hours, even more preferable greater than 190 hours, or most preferably greater than 195 hours.

Another method for determining the oxidative stability of the food products including the compositions disclosed herein is to utilize a standardized sensory panel. The standardized sensory panel assesses the organoleptic qualities of the composition or food product. The panelists included in these evaluations can select from numeric scales and assign a sensory score to rate the acceptability of the products tested. Specific odor and taste indicators associated with products include acidic, bacony, beany, bitter, bland, burnt, burnt caramel, cardboardy, caramelized, corny, deep fried, fishy, fruity, grains, grassy, green, green tea taste, hay, heated oil, hully, hydrogenated oil, lard, light struck oil, marine, melon, metallic, musty, muted, nutty, oaty, old oats, overheated oil, oxidized, painty, paraffin oil, peanut oil, pecan oil, petroleum, phenolic, pine oil, plastic, pondy, pumpkin, raisins, rancid, raw, reverted oil, rubbery, soapy, sour, stale granola, stale oats, sulfur, sunflower seed shell, sweet, syrupy, tangy, watermelon, waxy, weedy and woody.

The disclosed compositions can be particularly well suited for certain types of food applications. For foods that are enrobed in a coating, *e.g*., from fat, sugar, and flavor, the oxidative stability of the PUFAs is less of a concern, as is the taste. But foods that are generally porous and that are not enrobed are particularly well suited for using the disclosed compositions. The ingredients of such foods are typically more exposed to oxygen and thus oxygen sensitivity is of greater concern. Further, without an enrobed coating to mask or dominate off flavored ingredients, the presence of off flavored ingredients can be more pronounced and noticed. Thus, creamed fats have been used to enrobe some food products that contain PUFA oils (see WO 2008/24906). Creamed fats typically contain a carrier oil (*e.g*., palm oil at 5 to 7 wt.%), an antioxidant, lecithin, and a strong flavor, like bitter sweet chocolate and/or peanut butter. Using the compositions disclosed herein, the stability and sensory qualities of the PUFAs is much increased, and thus they can be used in food products that are not made from, or do not contain, creamed fats. Of course, the disclosed compositions can be used in products that contain strong masking flavors and/or creamed fats; they are however well suited for products that do not contain strong masking flavors and/or creamed fats.

The disclosed compositions and products produced according to the methods disclosed herein can be stored for a prolonged period of time. In some examples, products including the compositions can be stored at ambient temperature for up to 12 months, assuming microbial contamination is minimized. In other examples, products including the disclosed compositions can be stored at 35°C for 12 weeks, even in the absence of humidity control. The stability of the products upon extended storage can be measured according to the methods disclosed herein, including a sensory panel or an Oxipres instrument.

Products containing the disclosed compositions can have a stability characterized in that the products have a sensory score of less than 3.5, wherein the sensory score is determined by a sensory panel of at least 8 panelists who rate the flavor of the composition on the following scale: "1" means the panelist extremely liked the flavor and described the flavor using terms such as sweet, oaty, bland, syrupy, caramelized, grains, or raisins; "2" means the panelist liked the flavor very much and used terms such as old oats, stale oats, stale granola, burnt caramel, acidic, tangy, or muted; "3" means the panelist liked the flavor and described the flavor as odd, herbal, earthy, mushroom, musty, or green tea-taste; "4" means the panelist was indifferent, choosing terms such as gelatin, metallic, and soapy to describe the flavor; "5" means the panelist disliked the flavor and described the taste as green or grassy; "6" means the panelist disliked the flavor very much and described the taste as fishy or marine; and "7" means the panelist extremely disliked the flavor and described the flavor as painty or rancid. The highest number given for a flavor by each panelist is averaged and the result is the sensory score.

Products containing the disclosed compositions can have a stability characterized in that the products have an induction period of greater than 180 hours, 185 hours, 190 hours, or 195 hours, as measured by an Oxipress.

By use of the disclosed compositions, products can be prepared that have stability characterized in a passing sensory score (e.g., less than 3.5) and induction period (e.g., > 180 hours).

### Methods of Preparing Granola Bars

Granola bars containing PUFAs with improved sensory stability can be prepared using the compositions disclosed herein. The granola bars can be flavored or unflavored. The method can include preparing a binding syrup and adding the disclosed composition to the syrup during the cooling stage.

Specifically, ingredients suitable for forming a binding syrup can be mixed and heated. Such ingredients useful for forming a binding syrup include, for example, lecithin, canola oil, high fructose corn sugar, glucose, sugar, water and, optionally, flavoring. The ingredients can be heated to an elevated temperature and held until the appropriate °Brix is achieved (°Brix = 1 g sugar per 100 g H₂O). Suitable temperatures at which the ingredients can be mixed include, but are not limited to, at from 50 to 150 °C, from 70 to 140 °C, from 80 to 130 °C, from 90 to 120 °C, or from 100 to 110°C. In other examples, the ingredients can be heated at 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, 100, 101, 102, 103, 104, 105, 106, 107, 108, 109, 110, 111, 112, 113, 114, 115, 116, 117, 118, 119, 120, 121, 122, 123, 124, 125, 126, 127, 128, 129, 130, 131, 132, 133, 134, 135, 136, 137, 138, 139, 140, 141, 142, 143, 144, 145, 146, 147, 148, 149, or 150 °C, where any of the stated values can form an upper and/or lower endpoint of a range. In some specific examples, the ingredients can be heated at 90 °C until the desired °Brix is achieved *(e.g.,* 85 °Brix).

The resulting syrup can then be cooled, at which point different components can optionally be added. For example, citric acid can optionally be added to the binding syrup once the syrup cools to from 55°C to 58°C. The citric acid can be mixed until it is completely dissolved in the binding syrup. Upon further cooling to 55°C, flavors and/or masking agents can be added to the binding syrup. Suitable flavors and masking flavors include natural flavors *(e.g.,* natural fruit flavors) and artificial flavors *(e.g.,* artificial fruit flavors). For example, the flavors can include mint, menthol, caramel, cinnamon, vanilla, artificial vanilla, chocolate, artificial chocolate, bubblegum, banana, cherry, grape, orange, strawberry, melon, and lemon. Preferred flavors for use in the granola bars disclosed herein include strawberry, caramel, and dark chocolate. In some examples, flavors are not added to the binding syrups that include citric acid.

Upon further cooling, the composition as disclosed herein can be added to the binding syrup. The disclosed composition can be added at a temperature from 40°C to 55°C, from 45°C to 53°C, or from 49°C to 51°C. For example, the disclosed composition can be added at a temperature of 41°C, 42°C, 43°C, 44°C, 45°C, 46°C, 47°C, 48°C, 49°C, 50°C, 51°C, 52°C, 53°C, 54°C, or 55°C, where any of the stated values can form an upper and/or lower endpoint of a range. Preferably, the disclosed composition is added at 50°C. The resulting binding syrup can then be added into a granola composition and blended until the product is homogenous. The binding syrup can be added to the granola composition at a temperature the same as or lower than the temperature at which the disclosed composition is added to the binding syrup. Suitable ingredients for a granola product include oats, rice crisps, wheat flakes, and mixtures of these. The resulting granola product can be cold-pressed into a bar and further processed.

### EXAMPLES

The following examples are set forth below to illustrate the methods and results according to the disclosed subject matter. These examples are not intended to be inclusive of all aspects of the subject matter disclosed herein, but rather to illustrate representative methods and results. These examples are not intended to exclude equivalents and variations which are apparent to one skilled in the art.

Efforts have been made to ensure accuracy with respect to numbers (*e.g*., amounts, temperature, etc.) but some errors and deviations should be accounted for. Unless indicated otherwise, parts are parts by weight, temperature is in °C or is at ambient temperature, and pressure is at or near atmospheric. There are numerous variations and combinations of reaction conditions, *e.g*., component concentrations, temperatures, pressures and other reaction ranges and conditions that can be used to optimize the product purity and yield obtained from the disclosed process. Only reasonable and routine experimentation will be required to optimize such process conditions.

Certain materials, compounds, compositions, and components disclosed herein can be obtained commercially or readily synthesized using techniques generally known to those of skill in the art. For example, the starting materials and reagents used in preparing the disclosed compositions are either available from commercial suppliers such as Ocean Nutrition Canada Limited (Dartmouth, Canada), Acros Organics (Morris Plains, N.J.), Fisher Scientific (Pittsburgh, Pa.), or Sigma-Aldrich (St. Louis, Mo.), or are prepared by methods known to those skilled in the art following procedures set forth in references such as Fieser and Fieser's Reagents for Organic Synthesis, Volumes 1-17 (John Wiley and Sons, 1991); Rodd's Chemistry of Carbon Compounds, Volumes 1-5 and Supplementals (Elsevier Science Publishers, 1989); Organic Reactions, Volumes 1-40 (John Wiley and Sons, 1991); March's Advanced Organic Chemistry, (John Wiley and Sons, 4th Edition); and Larock's Comprehensive Organic Transformations (VCH Publishers Inc., 1989).

### Example 1: Preparation and Storage of Chewy Granola Bar

Flavored and unflavored chewy granola bars were prepared using the ingredients shown in Table 1.

**Table 1**

| **Ingredient** | | **% w/w** |
|---|---|---|
| Binding Syrup | Lecithin | 0.110 |
| | Canola oil | 1.10 |
| | HFCS 42 | 7.5 |
| | Glucose syrup | 31.8 |
| | Sugar | 6.5 |
| | Flavor | Q.S. |
| Granola mix | Brown Rice crisp | 7.0 |
| | Rolled oats | 37 |
| | Whole wheat flakes | 9.0 |

| | | |
|---|---|---|
| **Q.S. = Quantities sufficient** | | |

The granola bars were prepared by mixing the binding syrup ingredients (*i.e.,* lecithin, canola oil, high fructose corn syrup containing 42% fructose ("HFCS 42" in Table 1), glucose syrup, and sugar) and heating the mixture to 90°C using a double boiler. The mixture was held at this temperature until 85°Brix was obtained. The resulting syrup was cooled to 55-58°C. For the unflavored bars, citric acid was added at this point and mixed until complete dissolution was achieved. For the flavored bars, flavors (*e.g*., strawberry, caramel, and dark chocolate) and/or masking agents were added to the bars upon further cooling to 55°C and mixed until complete dispersion or dissolution was achieved. SUNPHENON 90LB^{™}, a green tea extract (GTE) powder commercially available from Taiyo Kagaku Co. (Yokkaichi, Mie, Japan), and a powdered microencapsulated PUFA from Ocean Nutrition Canada Limited (Dartmouth, Canada), were dry blended together. These were blended together in ratio of powdered green tea extract and powdered microcapsules of 1:20. The resulting composition was then added to the syrup upon cooling to 50°C, and mixed until completely dispersed. No SUNPHENON 90LB^{™} or powdered microencapsulated PUFA was added to the control bars. After preparing the binding syrup and while at 50°C, the mixture was then added into the granola mix as shown in Table 1 (*i.e.,* brown rice crisp, rolled oats, and whole wheat flakes) and mixed until the sample was homogenous. The mass was sheeted using a 9 in x 9 in x 0.5 in (23 cm x 23 cm x 1.3 cm) mold. After sheeting the bar into the mold, the mold and its contents were cooled at 4°C for 15 to 20 minutes. The sample was removed from the mold, cut to size, and packaged in foiled bags.

The unflavored or flavored chewy granola bars were stored under both accelerated conditions *(i.e.,* 35°C with no humidity control) and at ambient conditions *(i.e.,* 20-25°C). Samples under accelerated conditions were evaluated on a weekly basis for 12 weeks and samples under ambient conditions were evaluated monthly for 12 months.

### Example 2: Sensory Testing of Chewy Granola Bars

Samples containing a microencapsulated PUFA powder, a powdered green tea extract (SUNPHENON 90LB^{™}), and/or citric acid were prepared as described in Example 1. The microencapsulated PUFA powder contained either 32 mg EPA/DHA per 35 g of powder (data not shown) or 50 mg EPA/DHA per 35 g of powder. SUNPHENON 90LB^{™} was provided at either 200 ppm or 500 ppm. The amount of citric acid in the samples was 100 ppm or 300 ppm in granolas dosed at 32 mg EPA/DHA. For those granolas dosed at 50 mg EPA/DHA, 300 ppm to 500 ppm of citric acid was tested. The formulations and associated data are provided in Figures 1 and 2.

The samples were assessed by a trained panel of eight panelists using a descriptive sensory test where odor and flavor were evaluated on unflavored granola bars. Panelists ranked the flavor acceptability using a hedonic scale. A score of "1" means the panelist extremely liked the flavor and described the flavor using terms such as sweet, oaty, bland, syrupy, caramelized, grains, or raisins. A score of "2" means the panelist liked the flavor very much and used terms such as old oats, stale oats, stale granola, burnt caramel, acidic, tangy, or muted. A score of "3" means the panelist liked the flavor and described the flavor as odd, herbal, earthy, mushroom, musty, or green tea-taste. A score of "4" means the panelist was indifferent, choosing terms such as gelatin, metallic, and soapy to describe the flavor. A score of "5" means the panelist disliked the flavor and described the taste as green or grassy. A score of "6" means the panelist disliked the flavor very much and described the taste as fishy or marine. A score of "7" means the panelist extremely disliked the flavor and described the flavor as painty or rancid.

The highest descriptors weight given by the panelist was used to analyze the data (worse case scenario). The number designated for a descriptor was based on the highest ranking descriptor. For example: a flavor described as bland, earthy, marine would be given a score of 6, whereas a written descriptive as bland, off, earthy, black tea would be given a value of 3. The highest ranking descriptor of all the panelists was averaged. An average score of less than 3.5 is desirable.

The intensity of fishiness flavor was also ranked by the panelists, using the scale of "0" (meaning no fishy flavor) to "6" (meaning a pronounced fishy flavor).

As illustrated in Figures 1 and 2, the using a composition containing a green tea extract (SUNPHENON 90LB^{™} (Taiyo Kagaku Co.; Yokkaichi, Mie, Japan)) and a microencapsulated PUFA powder to form an unflavored cold pressed granola bar improved the sensory stability of the product by reducing detectable fishy notes or off notes related to the microencapsulated PUFA powder. The composition also extended the shelf life of the bar from 4-6 months to 12 months at ambient or 12 weeks at 35°C, with no humidity control.

### Example 3: Oxidative Stability Testing of the Chewy Granola Bars

To further confirm the effectiveness of the green tea extract SUNPHENON 90LB^{™} in minimizing or retarding the oxidative deterioration of the microencapsulated PUFA powder in the granola chewy bar, the oxidative stability was measured using a ML Oxipres (Mikrolab Aarhus A/S; Hojbjerg, Denmark).

A set of experiments was carried out using the unflavored chewy granola bar model system as a vehicle to incorporate the microencapsulated PUFA powder and the powdered green tea extract SUNPHENON 90LB^{™} and SUNPHENON 90D^{™} using the same processing conditions described above in Example 1. The experiments were carried out at a temperature of 65°C for 250 hours in the ML Oxipres. It was found that when the unflavored chewy granola bar only contains the microencapsulated PUFA powder at 50 mg EPA/DHA per serving, the induction period (IP) was 99.0 hours. However, when the unflavored chewy granola bar contained the same microencapsulated PUFA powder plus the addition of 500 ppm of the powdered green tea extract SUNPHENON 90LB^{™}, and SUNPHENON 90D^{™} the induction period was 197 and 196 hours, respectively (*see* Figure 3). These results confirmed the sensory findings provided in Example 2. Using a composition containing the powdered green tea extract SUNPHENON 90LB^{™} or SUNPHENON 90D^{™} and a powdered preparation comprising PUFAs in the unflavored model system described above improved the oxidative and sensory stability of the product over time.

### Example 4: Sensory Testing of Granola Bars Containing Different Antioxidants

In order to narrow down the source of the natural antioxidant, a pre-screening was carried out. Granola bars were prepared with formula described in Example 1, except the amounts of microencapsulated PUFA powder and antioxidants were varied. Bars were prepared using a composition containing a microencapsulated PUFA powder (which contained 75mg of EPA/DHA per 35g of granola bar) and several sources of green tea extracts such as TEAVIGO^{™}, SUNPHENON 90DCF-T^{™}, GUARDIAN 20S^{™} and GUARDIAN 20M^{™} and specific phenolic compounds such as Capros, SABERRY^{™}, Ellagic Extract were tested. As a result, green tea extract sources with high amount of polyphenols such as Teavigo and SUNPHENON 90DCF-T^{™} show a fair sensory stability, the rest of the natural antioxidants were not sensory stable. To further confirm the previous findings, another set of experiment was carried out. Bars were prepared using a composition containing a microencapsulated PUFA powder (which contained 75 mg of EPA/DHA per 35 g of granola bar and butylated hydroxyanisole (BHA); TEAVIGO^{™}, a green tea extract commercially available from Pharmachem Laboratories, Inc. (Kearny, NJ); VITAGREEN^{™} TX50 from Vitiva; SUNPHENON XLB^{™}; SUNPHENON 90LB^{™}; or SUNPHENON 90DCF-T^{™}, green tea extracts commercially available from Taiyo Kagaku Co. The samples were assessed by panelists using the descriptive sensory test described in Example 2. Based on the average of the scores, the granola bars containing a composition with a microencapsulated PUFA powder (labeled as PUFA Powder in Figure 4) and the green tea extract SUNPHENON 90LB^{™} provided the best sensory results (see Figure 4).

### Example 5: Sensory Stability Testing of Flavored Granola Bars

Cold pressed, chewy, flavored granola bars were prepared with a microencapsulated PUFA powder and antioxidants, as described in Example 1, except the SUNPHENON 90LB^{™} green tea extract was varied and citric acid was not used. Specifically, bars were prepared containing 50 mg EPA/DHA per serving, along with 200 to 500 ppm of SUNPHENON 90LB^{™} green tea extract and one of the following flavors: strawberry, caramel, and dark chocolate. The samples were assessed by panelists using the descriptive sensory test described in Example 2. Based on the average of the scores, the addition of 200 to 500 ppm of the green tea extract to the bars containing microencapsulated PUFA powder improved the sensory stability in reducing detectable fishy notes or off notes related to the microencapsulated PUFA powder ingredient. In addition, the shelf life of the bars was extended from 4-6 months to 12 months at ambient condition (20-25°C) or 12 weeks under accelerated conditions (35°C).

### Example 6: Effect of various antioxidants on the oxidative stability of powdered

### microencapsulated PUFAs

Granola base were prepare as described in Example 1 using a microencapsulated PUFA powder that contained (50 mg EPA/DHA per 35 g of granola bar) and various natural antioxidants. The results are shown in Table 2. Bars with just the microencapsulated PUFA and no antioxidant had an induction period of 99 hours.

**Table 2:**

| **Antioxidant** | **Commercial Name** | **Composition** | **Amount** | **Induction Period (IP)** | **Sensory Score*** |
|---|---|---|---|---|---|
| Decaffeinated | Sunphenon 90 LB | Total polyphenols 90 % | 500ppm | >195 | Pass |
| Green Tea | | Total catechins 80 % | | | |
| Extract | | EGC content 11% | | | |
| | | EGCG content 50 % | | | |
| Decaffeinated | Sunphenon 90D | Total polyphenols 90 % | 500ppm | >195 | Pass |
| Green Tea | | Total catechins 80 % | | | |
| Extract | | EGC content 12% | | | |
| | | EGCG content 49 % | | | |
| Decaffeinated | Sunphenon 90DCF-T | Total polyphenols 80 % | 500ppm | >195 | Fail |
| Green Tea | | Total catechins 80 % | | | |
| Extract | | EGC content < 1% | | | |
| | | EGCG content 50 % | | | |
| Decaffeinated | Sunphenon XLB | Total polyphenols 80 % | 500ppm | >195 | Fail |
| Green Tea | | Total catechins 60 % | | | |
| Extract | | EGC content 25% | | | |
| | | EGCG content 20 % | | | |
| Decaffeinated | Sunphenon XLB-100 | Total polyphenols 80 % | 500ppm | >195 | ND |
| Green Tea | | Total catechins 60 % | | | |
| Extract | | EGC content 40% | | | |
| | | EGCG content <1% | | | |
| Decaffeinated | Sunphenon 80A-T | Total polyphenols 80 % | 500ppm | 162 | ND |
| Green Tea | | Total catechins 70 % | | | |
| Extract | | EGC content < 1% | | | |
| | | EGCG content 55 % | | | |
| Decaffeinated | Teavigo | EGCG content >90% | 500ppm | 163 | Fail |
| Green Tea | | | | | |
| Extract | | | | | |
| Decaffeinated | Prochifar A | Total polyphenols 90 % | 500ppm | 177 | Pass |
| Green Tea | | Total catechins 80 % | | | |
| Extract | | EGC content 12 % | | | |
| | | EGCG content 40 % | | | |
| Decaffeinated | Prochifar B | Total polyphenols 90% | 500ppm | 172 | ND |
| Green Tea | | Total catechins 65% | | | |
| Extract | | EGC content 8% | | | |
| | | EGCG content 40% | | | |
| Decaffeinated | Prochifar C | Total polyphenols 90 % | 500ppm | 174 | Pass |
| Green Tea | | Total catechins 40 % | | | |
| Extract | | EGC content 9% | | | |
| | | EGCG content 40% | | | |
| Decaffeinated | Prochifar D | Total polyphenols 90 % | 500ppm | 181 | ND |
| Green Tea | | Total catechins 60 % | | | |
| Extract | | EGC content 9% | | | |
| | | EGCG content 30 % | | | |
| Decaffeinated | Prochifar E | Total polyphenols 90 % | 500ppm | 171 | ND |
| Green Tea | | Total catechins 70 % | | | |
| Extract | | EGC content 9% | | | |
| | | EGCG content 30 % | | | |
| Decaffeinated | Prochifar F | Total polyphenols 90 % | 500ppm | 168 | ND |
| Green Tea | | Total catechins 70 % | | | |
| Extract | | EGC content 9% | | | |
| | | EGCG content 40 % | | | |
| Decaffeinated | Prochifar G | EGC content 5% | 500ppm | 157 | ND |
| Green Tea | | EGCG content 10 % | | | |
| Extract | | | | | |
| Green Tea | Vitagreen TX50 | Total polyphenols 95 % | 500ppm | 169 | Fail |
| Extract | | Total catechins 75 % | | | |
| | | EGC content 7% | | | |
| | | EGCG content 50 % | | | |
| Mixture of Green tea extract with other functional ingredients | SyneROX 10 | EGC content 2% | 500ppm | 132 | Pass |
| | | EGCG content 10 % | | | |
| Green Tea extract powder | Guardian 20S | Total catechins 20 % | 500ppm | 127 | Fail |
| | | EGC content <1% | | | |
| | | EGCG content 4% | | | |
| Green Tea extract powder | Guardian 20M | Total catechins 20 % | 500ppm | 130 | Fail |
| | | EGC content <1% | | | |
| | | EGCG content 4% | | | |
| Black Currant Extract Powder | Ginnovay Black Currant Extract | *Ribes nigrum L* 10 % | 500ppm | 110 | ND |
| Natural Astaxanthin powder | AstaReal P2AF | Astaxanthin 2% | 10ppm | 103 | ND |
| *Origanum Vulgare* of Labiatae Family | Origanox WS | Rosemarinic acid, Quercetin and their derivatives | 300ppm | 91 | ND |
| *Melissa Offcinalis* of Labiatae Family | Origanox WS-LB | Rosemarinic acid and their derivatives | 300ppm | 88 | ND |
| Hytolive powder | Hytolive powder | Hydroxytyrosol 14.03%, Tyrosol 2%, other phenolics 1.75% | 100ppm | 103 | ND |
| Aquaolive | Aquaolive | Hydroxytyrosol > 9%, Ascorbic acid 4%, Mixed tocopherols 4% | 130ppm | 126 | ND |
| Hytolice syrup 35% | Hytolice syrup 35% | Hydroxytyrosol 42%, Tyrosol 5.63%, other phenolics 0.10% | 70ppm | 128 | ND |
| Grape seed extract | Orac-15,000 Grape Extract | Polyphenols 80%. ORAC value: 15,000 | 300ppm | 104 | ND |
| Fruit extract Blend | Standardized Fruit Blend (FSB) | Polyphenols 40% (Grape, pomegranate, blueberry, chokeberry, mangosteen, cranberry, Goji berry, apple and bilberry) ORAC value: 7,500 | 500ppm | 126 | ND |
| Grape Extract *Vitis vinifera I., Carignane, Cinsault* | BioVin Full Spectrum | Proanthocyanidisn 95%, Total Poliphenols 75%, Trans-Resveratrol > 200ppm | 300ppm | 103 | ND |
| Grape Extract *Vitis vinifera I* | BioVin™ 20 | Polyphenols 20%, Anthocyanins 4-6% | 500ppm | 102 | ND |

| | | | | | |
|---|---|---|---|---|---|
| *ND is "not determined." Pass had a sensory score below 3.5 and fail had a sensory score of 3.5 or above. | | | | | |

Various sources of natural antioxidants were assessed in their effectiveness for minimizing or retarding the oxidative deterioration of the powdered microencapsulated PUFA. In this qualitative test measured by Oxipres, a higher induction time of greater than about 195 hours, indicates an excellent improvement in oxidative stability of the powdered microencapsulated PUFA by the natural antioxidant. Lower induction time, e.g., less than about 180 hours, indicates poor performance of the natural antioxidant over the oxidative stability of the powdered microencapsulated PUFA. Sunphenon 90LB^{™} or Sunphenon 90D^{™} showed an excellent induction period over time. Other Sunphenon green tea extracts, 90 DCF-t and XLB, had poor sensory performance even though they had a successful induction period. While not wishing to be bound by theory, it is believed that the poor sensory scores were the result of low amounts of EGC (for 90DCF-T) or EGCG (for XLB), or the ratio of EGC to EGCG.

## Claims

1. A composition, comprising: a powdered green tea extract and a powdered preparation comprising polyunsaturated fatty acids, wherein the combined amount of the powdered green tea extract and the powdered preparation comprising polyunsaturated fatty acids is at least 90% by weight of the composition, and wherein the powdered green tea extract comprises at least 40 wt.% of epigallocatechin gallate (EGCG) and from 5 to 20 wt.% of epigallocatechin (EGC) based on the weight of the powdered green tea extract.

2. The composition of claim 1, wherein the powdered preparation comprising polyunsaturated fatty acids comprises a microcapsule, or a powdered emulsion.

3. The composition of any of claims 1-2, wherein the ratio of the green tea extract and the powdered preparation comprising polyunsaturated fatty acids is from 1:50 to 1:10.

4. The composition of any of claims 1-3, wherein the green tea extract contains greater than 80 wt. % total polyphenols and an EGCG content of greater than 45 wt.% based on the weight of the powdered green tea extract.

5. The composition of any of claims 1-3, wherein the green tea extract contains greater than 80 wt. % total polyphenols, an EGCG content of from 45 to 55 wt.%, and a EGC content of from 10 to 13 wt. % based on the weight of the powdered green tea extract.

6. The composition of any of claims 1-3, wherein the green tea extract contains an epicatechin (EC) content of from 6 to 15 wt.% based on the weight of the powdered green tea extract.

7. The composition of any of claims 2 to 6, wherein the microcapsule comprises an agglomeration of primary microcapsules and a loading substance, each individual primary microcapsule having a primary shell, wherein the loading substance comprises a polyunsaturated fatty acid and is encapsulated by the primary shell, and wherein the agglomeration is encapsulated by an outer shell, optionally wherein the primary shell, the outer shell, or both the primary and outer shells comprise a surfactant, gelatin, polyphosphate, polysaccharide, or a mixture thereof.

8. The composition of claim 7, wherein the primary shell, the outer shell, or both the primary and outer shells comprise any one or more of the following proteins: gelatin type A, gelatin type B, pork gelatin, beef gelatin, fish gelatin, kosher gelatin, non- kosher gelatin, Halal gelatin, non-Halal gelatin, milk protein, casein, caseinate, whey protein, soy protein, pea protein, rice protein, canola protein, albumin, alfa-lactalbumin, beta-lactoglobumin, or ovalbumin, in combination with any one or more of the following polymers: polyphosphate, gum arable, gellan gum, xylan gum, agar, alginate, chitin, chitosan, carrageenan, pectin, starch, modified starch, polysorbiton, maltodextrin, cyclodextrin, cellulose, methyl cellulose, ethyl cellulose, hydropropylmethylcellulose, or carboxymethylcellulose, optionally wherein the primary shell, the outer shell, or both the primary and outer shells comprise fish gelatin, pork gelatin, or beef gelatin.

9. The composition of any of claim 7 or claim 8, wherein the primary shell, the outer shell, or both the primary and outer shells comprise a complex coacervate, optionally wherein the complex coacervate is a complex coacervate of gelatin and polyphosphate.

10. The composition of any of claims 7-9, wherein the outer shell has an average diameter of from 1µm to 2,000 µm, and/or the primary shell has an average diameter of from 40 nm to 10 µm.

11. The composition of any of claims 7-10, wherein the loading substance is from 20% to 90% by weight of the microcapsule.

12. The composition of any of claims 1 or 3-6, wherein the emulsion comprises a polymer component and a loading substance comprising a polyunsaturated fatty acid, optionally wherein the polymer component comprises a surfactant, gelatin, polyphosphate, polysaccharide, or a mixture thereof.

13. The composition of claim12, wherein the polymer component comprises any one or more of the following: gelatin type A, gelatin type B, pork gelatin, beef gelatin, fish gelatin, kosher gelatin, non-kosher gelatin, Halal gelatin, non-Halal gelatin, milk protein, casein, caseinate, whey protein, soy protein, pea protein, rice protein, canola protein, albumin, alfa-lactalbumin, beta-lactoglobumin, ovalbumin, polyphosphate, gum arable, gellan gum, xylan gum, agar, alginate, chitin, chitosan, carrageenan, pectin, starch, modified starch, polysorbiton, maltodextrin, cyclodextrin, cellulose, methyl cellulose, ethyl cellulose, hydropropylmethylcellulose, and carboxymethylcellulose, including any mixture or combination of these.

14. The composition of any of claims 12-13, wherein the emulsion contains an average droplet size of less than 1000 nm.

15. The composition of any of claims 7-14, wherein the loading substance is from 1% to 50% by weight of the emulsion.

16. The composition of any of claims 7-15, wherein the loading substance comprises one or more oils chosen from a microbial oil, algal oil, fungal oil, and plant oil, and/or a fish oil.

17. The composition of any of claims 7-16, wherein the loading substance comprises an omega-3 fatty acid, an ester of an omega-3 fatty acid, and/or a mixture thereof, optionally wherein the ester of an omega-3 fatty acid comprises an alkyl ester of an omega-3 fatty acid, a monoglyceride of an omega-3 fatty acid, a diglyceride of an omega-3 fatty acid, a triglyceride ester of an omega-3 fatty acid, a phytosterol ester of an omega-3 fatty acid, an ester of an omega-3 fatty acid and an antioxidant, a furanoid ester of an omega-3 fatty acid, and/or a mixture thereof; and/or wherein the loading substance comprises docosahexaenoic acid and/or eicosapentaenoic acid, a C₁-C₆ alkyl ester thereof, a triglyceride ester thereof, a phytosterol ester thereof, and/or a mixture thereof; and/or wherein the loading substance further comprises one or more of vitamin A, vitamin D, vitamin E, and vitamin K, tocotrienol, lycopene, lutein, astaxanthin, zeazanthin, phytosterol or esters thereof, stanol or and esters thereof, Coenzyme Q10, ubiquinol, a hydrophobic amino acid, or an essential oil; and/or wherein the loading substance further comprises an additional biologically active substance or a nutritional supplement.

18. The composition of any of claims 1-17, wherein the composition is substantially free from minerals.

19. The composition of any of claims 1-18, further comprising citric acid.

20. A food product comprising the composition of any of claims 1-19, optionally wherein the
food product is a nutritional bar, or a granola bar.

21. A method for preparing a composition as defined in any of claims 1-19 comprising: blending a powdered green tea extract and powdered preparation comprising polyunsaturated fatty acids.

22. A method for preparing a granola bar, as defined in claim 20, comprising:
providing a binding syrup at an elevated temperature;
cooling the binding syrup;
optionally adding citric acid to the cooled binding syrup;
optionally adding a flavor, a masking flavor, or a mixture of these to the cooled binding syrup;
adding a composition comprising a powdered green tea extract and a powdered preparation comprising polyunsaturated fatty acids; and
blending the resulting mixture with a granola composition;
optionally wherein the citric acid is present in an amount of from 1 to 7.5% by weight of the composition comprising the powdered green tea extract and the powdered preparation comprising polyunsaturated fatty acids.

## Patentansprüche

1. Zusammensetzung, umfassend: einen pulverförmigen Grünteeextrakt und eine pulverförmige Zubereitung, die mehrfach ungesättigte Fettsäuren umfasst, wobei die kombinierte Menge des pulverförmigen Grünteeextrakts und der pulverförmigen Zubereitung, die mehrfach ungesättigte Fettsäuren umfasst, wenigstens 90 Gew.-% der Zusammensetzung beträgt und wobei der pulverförmige Grünteeextrakt wenigstens 40 Gew.-% Epigallocatechingallat (EGCG) und von 5 bis 20 Gew.-% Epigallocatechin (EGC) bezogen auf das Gewicht des pulverförmigen Grünteeextrakts umfasst.

2. Zusammensetzung gemäß Anspruch 1, wobei die pulverförmige Zubereitung, die mehrfach ungesättigte Fettsäuren umfasst, eine Mikrokapsel oder eine pulverförmige Emulsion umfasst.

3. Zusammensetzung gemäß einem der Ansprüche 1-2, wobei das Verhältnis des Grünteeextrakts und der pulverförmigen Zubereitung, die mehrfach ungesättigte Fettsäuren umfasst, von 1:50 bis 1:10 beträgt.

4. Zusammensetzung gemäß einem der Ansprüche 1-3, wobei der Grünteeextrakt mehr als 80 Gew.-% an Gesamtpolyphenolen und einen EGCG-Gehalt von mehr als 45 Gew.-% bezogen auf das Gewicht des pulverförmigen Grünteeextrakts enthält.

5. Zusammensetzung gemäß einem der Ansprüche 1-3, wobei der Grünteeextrakt mehr als 80 Gew.-% an Gesamtpolyphenolen, einen EGCG-Gehalt von 45 bis 55 Gew.-% und einen EGC-Gehalt von 10 bis 13 Gew.-% bezogen auf das Gewicht des pulverförmigen Grünteeextrakts enthält.

6. Zusammensetzung gemäß einem der Ansprüche 1-3, wobei der Grünteeextrakt einen Epicatechin(EC)-Gehalt von 6 bis 15 Gew.-% bezogen auf das Gewicht des pulverförmigen Grünteeextrakts enthält.

7. Zusammensetzung gemäß einem der Ansprüche 2 bis 6, wobei die Mikrokapsel eine Agglomeration von primären Mikrokapseln und einen Ladestoff umfasst, wobei jede einzelne primäre Mikrokapsel eine Primärhülle aufweist, wobei der Ladestoff eine mehrfach ungesättigte Fettsäure umfasst und von der Primärhülle eingekapselt ist und wobei die Agglomeration von einer Außenhülle eingekapselt wird, gegebenenfalls wobei die Primärhülle, die Außenhülle oder sowohl die Primär- als auch die Außenhülle ein grenzflächenaktives Mittel, Gelatine, Polyphosphat, Polysaccharid oder ein Gemisch davon umfassen.

8. Zusammensetzung gemäß Anspruch 7, wobei die Primärhülle, die Außenhülle oder sowohl die Primär- als auch die Außenhülle eines oder mehrere der folgenden Proteine umfassen: Gelatine Typ A, Gelatine Typ B, Schweinegelatine, Rindergelatine, Fischgelatine, koschere Gelatine, nichtkoschere Gelatine, Halal-Gelatine, Nichthalal-Gelatine, Milchprotein, Kasein, Kaseinat, Molkeprotein, Sojaprotein, Erbsenprotein, Reisprotein, Canolaprotein, Albumin, alpha-Lactalbumin, beta-Lactoglobumin oder Ovalbumin, in Kombination mit einem oder mehreren der folgenden Polymere:
Polyphosphat, Gummi arabicum, Gellangummi, Xylangummi, Agar, Alginat, Chitin, Chitosan, Carrageenan, Pectin, Stärke, modifizierte Stärke, Polysorbiton, Maltodextrin, Cyclodextrin, Cellulose, Methylcellulose, Ethylcellulose, Hydroxypropylmethylcellulose oder Carboxymethylcellulose, gegebenenfalls wobei die Primärhülle, die Außenhülle oder sowohl die Primär- als auch die Außenhülle Fischgelatine, Schweinegelatine oder Rindergelatine umfassen.

9. Zusammensetzung gemäß einem von Anspruch 7 und Anspruch 8, wobei die Primärhülle, die Außenhülle oder sowohl die Primär- als auch die Außenhülle ein Komplexkoazervat umfassen, gegebenenfalls wobei das Komplexkoazervat ein Komplexkoazervat von Gelatine und Polyphosphat ist.

10. Zusammensetzung gemäß einem der Ansprüche 7-9, wobei die Außenhülle einen mittleren Durchmesser von 1 µm bis 2.000 µm aufweist und/oder die Primärhülle einen mittleren Durchmesser von 40 nm bis 10 µm aufweist.

11. Zusammensetzung gemäß einem der Ansprüche 7-10, wobei der Ladestoff von 20 Gew.-% bis 90 Gew.-% der Mikrokapsel darstellt.

12. Zusammensetzung gemäß einem der Ansprüche 1 und 3-6, wobei die Emulsion eine Polymerkomponente und einen Ladestoff umfassend eine mehrfach ungesättigte Fettsäure umfasst, gegebenenfalls wobei die Polymerkomponenten ein grenzflächenaktives Mittel, Gelatine, Polyphosphat, Polysaccharid oder ein Gemisch davon umfasst.

13. Zusammensetzung gemäß Anspruch 12, wobei die Polymerkomponente eines oder mehrere von folgendem umfasst: Gelatine Typ A, Gelatine Typ B, Schweinegelatine, Rindergelatine, Fischgelatine, koschere Gelatine, nichtkoschere Gelatine, Halal-Gelatine, Nichthalal-Gelatine, Milchprotein, Kasein, Kaseinat, Molkeprotein, Sojaprotein, Erbsenprotein, Reisprotein, Canolaprotein, Albumin, alpha-Lactalbumin, beta-Lactoglobumin, Ovalbumin, Polyphosphat, Gummi arabicum, Gellangummi, Xylangummi, Agar, Alginat, Chitin, Chitosan, Carrageenan, Pectin, Stärke, modifizierte Stärke, Polysorbiton, Maltodextrin, Cyclodextrin, Cellulose, Methylcellulose, Ethylcellulose, Hydroxypropylmethylcellulose und Carboxymethylcellulose, einschließlich jedes Gemischs und jeder Kombination von diesen.

14. Zusammensetzung gemäß einem der Ansprüche 12-13, wobei die Emulsion eine mittlere Tröpfchengröße von weniger als 1000 nm aufweist.

15. Zusammensetzung gemäß einem der Ansprüche 7-14, wobei der Ladestoff von 1 Gew.-% bis 50 Gew.-% der Emulsion darstellt.

16. Zusammensetzung gemäß einem der Ansprüche 7-15, wobei der Ladestoff ein oder mehrere Öle ausgewählt aus einem mikrobiellen Öl, Algenöl, Pilzöl und Pflanzenöl und/oder ein Fischöl umfasst.

17. Zusammensetzung gemäß einem der Ansprüche 7-16, wobei der Ladestoff eine Omega-3-Fettsäure, einen Ester einer Omega-3-Fettsäure und/oder ein Gemisch davon umfasst, gegebenenfalls wobei der Ester einer Omega-3-Fettsäure einen Alkylester einer Omega-3-Fettsäure, ein Monoglycerid einer Omega-3-Fettsäure, ein Diglycerid einer Omega-3-Fettsäure, einen Triglyceridester einer Omega-3-Fettsäure, einen Phytosterolester einer Omega-3-Fettsäure, einen Ester einer Omega-3-Fettsäure und eines Antioxidationsmittels, einen Furanoidester einer Omega-3-Fettsäure und/oder ein Gemisch davon umfasst; und/oder wobei der Ladestoff Docosahexaensäure und/oder Eicosapentaensäure, einen C₁-C₆-Alkylester davon, einen Triglyceridester davon, einen Phytosterolester davon und/oder ein Gemisch davon umfasst; und/oder wobei der Ladestoff ferner eines oder mehrere von Vitamin A, Vitamin D, Vitamin E und Vitamin K, Tocotrienol, Lycopen, Lutein, Astaxanthin, Zeazanthin, Phytosterol oder Ester davon, Stanol oder/und Ester davon, Coenzym Q10, Ubichinol, eine hydrophobe Aminosäure oder ein essentielles Öl umfasst; und/oder wobei der Ladestoff ferner einen zusätzlichen biologischen Wirkstoff oder eine Nahrungsergänzung umfasst.

18. Zusammensetzung gemäß einem der Ansprüche 1-17, wobei die Zusammensetzung im Wesentlichen frei von Mineralstoffen ist.

19. Zusammensetzung gemäß einem der Ansprüche 1-18, ferner umfassend Citronensäure.

20. Lebensmittelprodukt umfassend die Zusammensetzung gemäß einem der Ansprüche 1-19, gegebenenfalls wobei das Lebensmittelprodukt ein Nahrungsriegel oder ein Müsliriegel ist.

21. Verfahren zum Herstellen einer Zusammensetzung gemäß einem der Ansprüche 1-19, umfassend: Mischen eines pulverförmigen Grünteeextrakts und einer pulverförmigen Zubereitung, die mehrfach ungesättigte Fettsäuren umfasst.

22. Verfahren zum Herstellen eines Müsliriegels gemäß Anspruch 20, umfassend:
Bereitstellen eines Bindesirups bei einer erhöhten Temperatur;
Abkühlen des Bindesirups;
gegebenenfalls Zugeben von Citronensäure zu dem abgekühlten Bindesirup;
gegebenenfalls Zugeben eines Aromas, eines maskierenden Aromas oder eines Gemischs von diesen zu dem abgekühlten Bindesirup;
Zugeben einer Zusammensetzung umfassend einen pulverförmigen Grünteeextrakt und eine pulverförmige Zubereitung, die mehrfach ungesättigte Fettsäuren umfasst; und
Mischen des erhaltenen Gemischs mit einer Müslizusammensetzung;
gegebenenfalls wobei die Citronensäure in einer Menge von 1 bis 7,5 Gew.-% der Zusammensetzung umfassend den pulverförmigen Grünteeextrakt und die pulverförmige Zubereitung, die mehrfach ungesättigte Fettsäuren umfasst, vorhanden ist.

## Revendications

1. Composition comprenant : un extrait de thé vert en poudre et une préparation pulvérulente comprenant des acides gras polyinsaturés, dans laquelle la quantité combinée de l'extrait de thé vert en poudre et de la préparation pulvérulente comprenant des acides gras polyinsaturés constitue au moins 90% en poids de la composition, et où l'extrait de thé vert en poudre comprend au moins 40% en poids de gallate d'épigallocatéchine (EGCG) et de 5 à 20% en poids d'épigallocatéchine (EGC) sur la base du poids de l'extrait de thé vert en poudre.

2. Composition selon la revendication 1, dans laquelle la préparation pulvérulente comprenant des acides gras polyinsaturés comprend une microcapsule, ou une émulsion pulvérulente.

3. Composition selon l'une quelconque des revendications 1-2, dans laquelle le rapport de l'extrait de thé vert à la préparation pulvérulente comprenant des acides gras polyinsaturés va de 1:50 à 1:10.

4. Composition selon l'une quelconque des revendications 1-3, dans laquelle l'extrait de thé vert contient plus de 80% en poids de polyphénols totaux et une teneur en EGCG supérieure à 45% en poids sur la base du poids de l'extrait de thé vert en poudre.

5. Composition selon l'une quelconque des revendications 1-3, dans laquelle l'extrait de thé vert contient plus de 80% en poids de polyphénols totaux, une teneur en EGCG allant de 45 à 55% en poids, et une teneur en EGC allant de 10 à 13% en poids sur la base du poids de l'extrait de thé vert en poudre.

6. Composition selon l'une quelconque des revendications 1-3, dans laquelle l'extrait de thé vert contient une teneur en épicatéchine (EC) allant de 6 à 15% en poids sur la base du poids de l'extrait de thé vert en poudre.

7. Composition selon l'une quelconque des revendications 2 à 6, dans laquelle la microcapsule comprend une agglomération de microcapsules primaires et une substance de charge, chaque microcapsule primaire individuelle possédant une enveloppe primaire, où la substance de charge comprend un acide gras polyinsaturé et est encapsulée par l'enveloppe primaire, et où l'agglomération est encapsulée par une enveloppe externe, éventuellement où l'enveloppe primaire, l'enveloppe externe, ou l'enveloppe primaire ainsi qu'externe comprennent un agent tensioactif, de la gélatine, un polyphosphate, un polysaccharide, ou un mélange de ceux-ci.

8. Composition selon la revendication 7, dans laquelle l'enveloppe primaire, l'enveloppe externe, ou l'enveloppe primaire ainsi qu'externe comprennent l'une ou plusieurs quelconques parmi les protéines suivantes : la gélatine de type A, la gélatine de type B, la gélatine de porc, la gélatine de boeuf, la gélatine de poisson, la gélatine casher, la gélatine non casher, la gélatine halal, la gélatine non halal, les protéines de lait, les caséines, les caséinates, les protéines de lactosérum, les protéines de soja, les protéines de pois, les protéines de riz, les protéines de canola, les albumines, l'alpha-lactalbumine, la bêta-lactoglobuline ou l'ovalbumine, en combinaison avec un ou plusieurs quelconques parmi les polymères suivants : un polyphosphate, la gomme arabique, la gomme gellane, la gomme xylane, l'agar-agar, un alginate, une chitine, un chitosane, un carraghénane, une pectine, un amidon, un amidon modifié, un polysorbitane, une maltodextrine, une cyclodextrine, la cellulose, la méthylcellulose, l'éthylcellulose, l'hydroxypropyl méthylcellulose, ou la carboxyméthylcellulose, éventuellement où l'enveloppe primaire, l'enveloppe externe, ou l'enveloppe primaire ainsi qu'externe comprennent de la gélatine de poisson, de la gélatine de porc, ou de la gélatine de boeuf.

9. Composition selon l'une quelconque parmi la revendication 7 ou la revendication 8, dans laquelle l'enveloppe primaire, l'enveloppe externe, ou l'enveloppe primaire ainsi qu'externe comprennent un coacervat complexe, éventuellement où le coacervat complexe est un coacervat complexe de gélatine et de polyphosphate.

10. Composition selon l'une quelconque des revendications 7-9, dans laquelle l'enveloppe externe possède un diamètre moyen allant de 1 µm à 2000 µm, et/ou l'enveloppe primaire possède un diamètre moyen allant de 40 nm à 10 µm.

11. Composition selon l'une quelconque des revendications 7-10, dans laquelle la substance de charge constitue de 20% à 90% en poids de la microcapsule.

12. Composition selon l'une quelconque des revendications 1 ou 3-6, dans laquelle l'émulsion comprend un composant polymère et une substance de charge comprenant un acide gras polyinsaturé, éventuellement où le composant polymère comprend un agent tensioactif, de la gélatine, un polyphosphate, un polysaccharide, ou un mélange de ceux-ci.

13. Composition selon la revendication 12, dans laquelle le composant polymère comprend l'un(e) ou plusieurs quelconques parmi ce qui suit : la gélatine de type A, la gélatine de type B, la gélatine de porc, la gélatine de boeuf, la gélatine de poisson, la gélatine casher, la gélatine non casher, la gélatine halal, la gélatine non halal, les protéines de lait, les caséines, les caséinates, les protéines de lactosérum, les protéines de soja, les protéines de pois, les protéines de riz, les protéines de canola, les albumines, l'alpha-lactalbumine, la bêta-lactoglobuline, l'ovalbumine, un polyphosphate, la gomme arabique, la gomme gellane, la gomme xylane, l'agar-agar, un alginate, une chitine, un chitosane, un carraghénane, une pectine, un amidon, un amidon modifié, un polysorbitane, une maltodextrine, une cyclodextrine, la cellulose, la méthylcellulose, l'éthylcellulose, l'hydroxypropyl méthylcellulose, et la carboxyméthylcellulose, y compris un mélange ou une combinaison quelconque de ceux-ci.

14. Composition selon l'une quelconque des revendications 12-13, dans laquelle l'émulsion contient une taille de gouttelettes moyenne inférieure à 1000 nm.

15. Composition selon l'une quelconque des revendications 7-14, dans laquelle la substance de charge constitue de 1% à 50% en poids de l'émulsion.

16. Composition selon l'une quelconque des revendications 7-15, dans laquelle la substance de charge comprend une ou plusieurs huiles choisies parmi une huile microbienne, une huile algale, une huile fongique, et une huile végétale et/ou une huile de poisson.

17. Composition selon l'une quelconque des revendications 7-16, dans laquelle la substance de charge comprend un acide gras oméga-3, un ester d'un acide gras oméga-3, et/ou un mélange de ceux-ci, éventuellement où l'ester d'un acide gras oméga-3 comprend un alkylester d'un acide gras oméga-3, un monoglycéride d'un acide gras oméga-3, un diglycéride d'un acide gras oméga-3, un triglycéride ester d'un acide gras oméga-3, un phytostérol ester d'un acide gras oméga-3, un ester d'un acide gras oméga-3 et d'un antioxydant, un furanoïde ester d'un acide gras oméga-3, et/ou un mélange de ceux-ci ; et/ou où la substance de charge comprend de l'acide docosahexaénoïque et/ou de l'acide eicosapentaénoïque, un C₁-C₆alkylester de ceux-ci, un triglycéride ester de ceux-ci, un phytostérol ester de ceux-ci, et/ou un mélange de ceux-ci ; et/ou où la substance de charge comprend un(e) ou plusieurs parmi la vitamine A, la vitamine D, la vitamine E, et la vitamine K, le tocotriénol, le lycopène, la lutéine, l'astaxanthine, la zéaxanthine, le phytostérol ou des esters de celui-ci, le stanol et/ou des esters de celui-ci, le Coenzyme Q 10, l'ubiquinol, un acide aminé hydrophobe, ou une huile essentielle ; et/ou où la substance de charge comprend en outre une substance biologiquement active ou un complément nutritionnel supplémentaire.

18. Composition selon l'une quelconque des revendications 1-17, où la composition est sensiblement dépourvue de minéraux.

19. Composition selon l'une quelconque des revendications 1-18, comprenant en outre de l'acide citrique.

20. Produit alimentaire comprenant la composition selon l'une quelconque des revendications 1-19, éventuellement où le produit alimentaire est une barre nutritionnelle, ou une barre de céréales.

21. Méthode de préparation d'une composition telle que définie selon l'une quelconque des revendications 1-19, comprenant : le mélange d'un extrait de thé vert en poudre et d'une préparation pulvérulente comprenant des acides gras polyinsaturés.

22. Méthode de préparation d'une barre de céréales, telle que définie selon la revendication 20, comprenant :
la fourniture d'un sirop liant à une température élevée ;
le refroidissement du sirop liant ;
éventuellement l'addition d'acide citrique au sirop liant refroidi ;
éventuellement l'addition d'un arôme, d'un arôme de masquage, ou d'un mélange de ceux-ci au sirop liant refroidi ;
l'addition d'une composition comprenant un extrait de thé vert en poudre et une préparation pulvérulente comprenant des acides gras polyinsaturés ; et
le malaxage du mélange résultant avec une composition de granola ;
éventuellement où l'acide citrique est présent selon une quantité allant de 1 à 7,5% en poids de la composition comprenant l'extrait de thé vert en poudre et la préparation pulvérulente comprenant des acides gras polyinsaturés.
